# EUROPEAN PATENT APPLICATION

(11) **EP 4 712 179 A1**
(43) Date of publication of application: **18.03.2026**
(21) Application number: 24856608.5
(22) Date of filing: 11.06.2024
(51) Int. Cl.: H01M 10/04, B65H 35/00, C09J 7/40

(54) **TAPE FOR MANUFACTURING BATTERY MODULE, BATTERY MODULE COMPRISING BATTERY CELLS TO WHICH TAPE FOR MANUFACTURING BATTERY MODULE IS ATTACHED, AND METHOD FOR MANUFACTURING BATTERY MODULE**

(30) Priority: 18.08.2023 KR 20230108630
(71) Applicant: LG Energy Solution, Ltd., Seoul 07335 (KR)
(72) Inventor: PARK, Chan Seo, Daejeon 34122 (KR); KWON, Hee Yong, Daejeon 34122 (KR); KIM, Seok Hee, Daejeon 34122 (KR); AHN, Kwan Hyeuk, Daejeon 34122 (KR); HER, Pill Jun, Daejeon 34122 (KR); AN, Seong Woo, Daejeon 34122 (KR)
(74) Representative: Plasseraud IP
(86) International application number: PCT/KR2024/008003
(87) International publication number: WO 2025/041992

(57) **Abstract**

A manufacturing method of a battery module including a step of attaching an adhesive to a battery cell includes a tape supply step in which a laminated tape having a release paper placed on one side and a sheet-like adhesive placed on the other side is continuously supplied to pass through a roller, and is supplied so that the release paper contacts the roller; an adhesive step in which a gripper gripping the battery cell glides over the roller so that the adhesive comes into contact with one surface of the battery cell, and thus the adhesive is separated from the release paper and adhered to the battery cell; and a cutting step in which the adhesive is cut by the ascent of the gripper, wherein the adhesive has a concave portion with a concave shape formed on the contact surface with the release paper so that the thickness is reduced compared to other places.

## Description

### TECHNICAL FIELD

The present application claims priority to Korean Patent Application No. 10-2023-0108630 filed on August 18, 2023 in the Republic of Korea, the disclosure of which is incorporated herein by reference.

The present disclosure relates to a tape for manufacturing a battery module, a battery module including a battery cell to which the tape for manufacturing a battery module is attached, and a manufacturing method of a battery module, and more specifically, to a tape for manufacturing a battery module capable of preventing the sagging of an adhesive and the scattering of the adhesive pieces when attached to a battery cell, a battery module including a battery cell to which the tape for manufacturing a battery module is attached, and a manufacturing method of the battery module.

### BACKGROUND ART

Demand for high-efficiency secondary batteries is rapidly increasing in the fields of portable devices and electric vehicles. Among such secondary batteries, lithium secondary batteries that have high energy density, are capable of maintaining a relatively high voltage, and have a low self-discharge rate, have been commercialized and widely used, and research and development for improving performance are being actively conducted.

Secondary batteries have a structure in which an electrode assembly and an electrolyte are embedded in a case such as a can or pouch.

Among these, the pouch-type secondary battery has a structure in which an electrode assembly is mounted within a pouch. In this case, the electrode assembly has a structure in which a positive electrode, a separator, and a negative electrode are repeatedly stacked, wherein the positive electrode tabs extending from each positive electrode are collected together and bonded to the positive electrode lead, and the negative electrode tabs extending from each negative electrode are collected together and bonded to the negative electrode lead. And, the ends of the positive electrode lead and the negative electrode lead protrude from the pouch so as to be electrically connected to the outside.

Meanwhile, a plurality of secondary batteries mounted on vehicles and energy storage systems (ESSs) are combined to form a battery module to increase the output and electricity storage capacity, and a plurality of battery modules are combined to form a battery pack. That is, a plurality of battery cells (secondary batteries) are collected together to be manufactured as a battery module, and a plurality of battery modules are collected together to be manufactured as a battery pack.

When the pouch-type secondary battery is manufactured as a battery module, the battery cells are stacked so that their flat surfaces are in contact with each other, wherein an adhesive is attached to the contact surfaces to be provided in a state of being bound to each other. The adhesive bonds the surfaces facing each other, such as a glue or a double-sided adhesive tape.

For reference, even when a compression pad is inserted between neighboring battery cells, an adhesive is attached to the battery cells to bond them to the compression pad. The compression pad is selectively provided to protect the battery cells from sudden shock and vibration that may be caused by movement of the battery cells, temperature or other environmental factors, and absorbs contraction and expansion due to charge/discharge of the battery cells, and in the event of a fire in a specific battery cell, it provides a function of preventing the spread of fire to neighboring battery cells. That is, regardless of whether there is a compression pad between the battery cells, the battery cells are stacked with an adhesive attached to them to ensure fixation during stacking.

Therefore, the process of manufacturing a battery module includes the step of attaching the adhesive 2 to the battery cell 5.

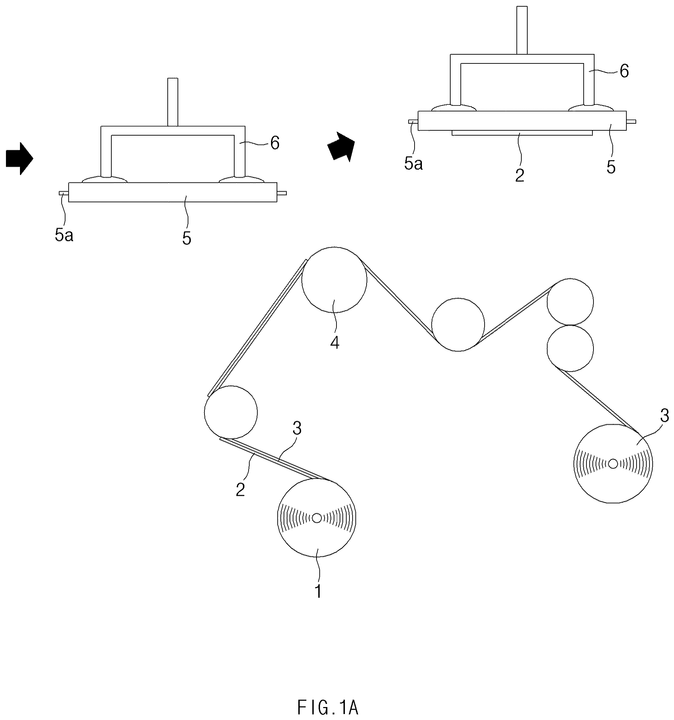

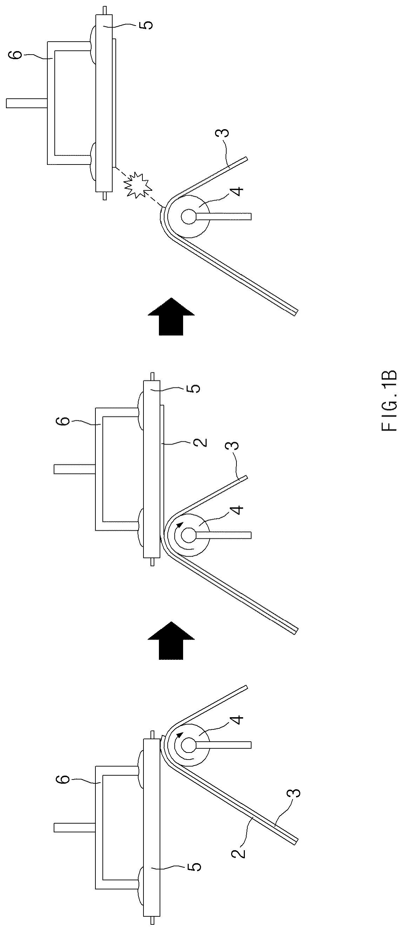

Referring to FIG. 1a, which shows a state where the adhesive 2 to be attached to the battery cell 5 is provided, and FIG. 1b, which sequentially shows the state of attaching the adhesive 2 to the battery cell 5, the adhesive 2 to be attached to the battery cell 5 is provided as an 'adhesive transfer tape' as disclosed in Patent Publication No. 10-2018-0092752. That is, it is provided in the form of a laminated tape 1 having a release paper 3 placed on one side and a sheet-like adhesive 2 placed on the other side, wherein the tape 1 is configured to be unwound in the form of a roll and to move through a plurality of rollers while being unwound. While the tape 1 is being unwound and moving, a gripper 6 gripping the battery cell 5 glides over one of the rollers 4 so that the adhesive 2 comes into contact with the bottom surface of the battery cell 5, and thus the adhesive 2 is separated from the release paper 3 and adhered to the battery cell 5.

Accordingly, the battery cell 5 is separated with the adhesive 2 attached to its bottom surface, and the release paper 3 from which the adhesive 2 has been peeled off is wound into a roll.

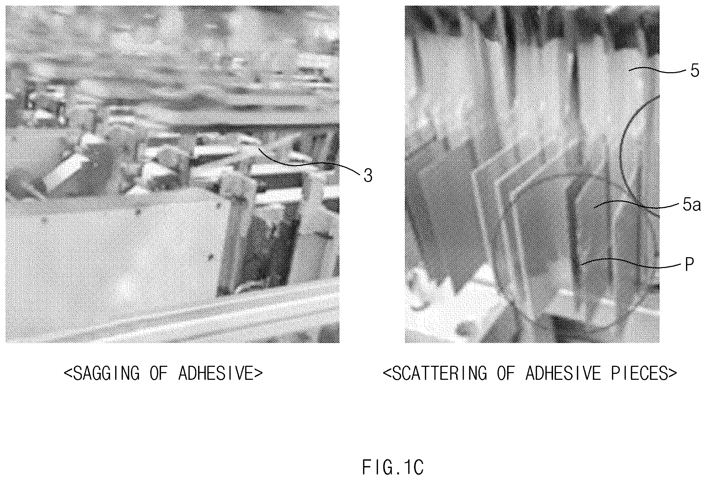

In this case, when the adhesive 2 is attached to the bottom surface of the battery cell 5, the adhesive 2 is configured to be cut by the upward force of the gripper 6 without a separate cutter. However, as shown in FIG. 1c, which shows the sagging of the adhesive 2 and the scattering of the adhesive pieces, there were cases where the manufacturing process was interrupted as the adhesive 2 was stretched without being broken at the correct time. Additionally, if the scattered pieces of adhesive splattered onto the electrode lead 5a, there was a possibility of causing welding defects when the electrode lead 5a was welded, resulting in product defects.

Also, the tape 1 is provided in roll form and is replaced at the operator's discretion. However, since the criteria for replacement time were unclear, there was a problem that it was replaced even though the adhesive 2 was sufficiently left, resulting in waste of cost.

### SUMMARY

### TECHNICAL PROBLEM

The present disclosure is designed to solve the problems of the related art, and therefore the present disclosure is directed to providing a tape for manufacturing a battery module in which the adhesive may be cut more accurately and quickly when the gripper ascends, a battery module including a battery cell to which the tape for manufacturing a battery module is attached, and a manufacturing method of the battery module.

The present disclosure is also directed to providing a manufacturing method of a battery module capable of minimizing waste by accurately guiding the replacement time of the tape.

### TECHNICAL SOLUTION

The present disclosure for achieving the above-described purpose provides a tape for manufacturing a battery module, a battery module including a battery cell to which the tape for manufacturing a battery module is attached, and a manufacturing method of the battery module.

The manufacturing method of a battery module provided by the present disclosure is a manufacturing method of a battery module including a step of attaching an adhesive to a battery cell, and includes a tape supply step in which a laminated tape having a release paper placed on one side and a sheet-like adhesive placed on the other side is continuously supplied to pass through a roller, and is supplied so that the release paper contacts the roller; an adhesive step in which a gripper gripping the battery cell glides over the roller so that the adhesive comes into contact with one surface of the battery cell, and thus the adhesive is separated from the release paper and adhered to the battery cell; and a cutting step in which the adhesive is cut by the ascent of the gripper, wherein the adhesive has a concave portion with a concave shape formed on the contact surface with the release paper so that the thickness is reduced compared to other places.

In the adhesive, convex portions having a protruding shape are formed between neighboring concave portions, and the release paper is formed to correspond to irregular shapes that engage each of the concave portions of the adhesive and the convex portions of the adhesive.

The adhesive is formed so that the concave portions form a lattice shape on the surface in contact with the release paper.

The adhesive is formed so that the length of the convex portion is longer than the length of the concave portion on the surface in contact with the release paper.

The adhesive is formed so that the thickness of the concave portion is in the range of 50% to 70% of the thickness of the convex portion.

The tape provided in the tape supply step is provided by being unwound in a roll state, and is manufactured so that an exposed portion where only the release paper is exposed for a certain length from the end of the adhesive is formed at the end of the unwinding.

The manufacturing method of a battery module includes a tape replacement guide step in which an optical sensor sensing the exposed portion while the tape is unwound is disposed, and the replacement of the tape is guided when the optical sensor senses the exposed portion.

In the tape replacement guide step, an audible or visual notification is displayed when the optical sensor senses the exposed portion.

A plurality of the optical sensors are disposed, respectively, at positions spaced apart from each other.

The tape for manufacturing a battery module provided by the present disclosure is a tape for manufacturing a battery module which is laminated so that the sheet-like adhesive attached to the battery cell manufactured as a battery module is placed on one side and the release paper is placed on the other side, wherein the adhesive has a concave portion with a concave shape formed on the contact surface with the release paper so that the thickness is reduced compared to other places.

In the adhesive, convex portions having a protruding shape are formed between neighboring concave portions, and the release paper is formed to correspond to irregular shapes that engage each of the concave portions of the adhesive and the convex portions of the adhesive.

The adhesive is formed so that the concave portions form a lattice shape on the surface in contact with the release paper.

The release paper has a longer length than the adhesive so that the exposed portion where only the release paper is exposed for a certain length from the end of the adhesive is formed.

The exposed portions are formed at each of both ends of the adhesive.

The battery module provided by the present disclosure is a battery module including (i.e., stacking) at least one battery cell to which the adhesive of the tape for manufacturing a battery module described above is attached.

### ADVANTAGEOUS EFFECTS

In the present disclosure having the above configuration, the adhesive has a concave portion with a concave shape formed on the contact surface with the release paper, so that when the gripper ascends, the adhesive may be more easily broken in the concave portion.

The release paper is formed to correspond to irregular shapes that engage each of the concave portions of the adhesive and the convex portions of the adhesive, so that the release paper may stably preserve the adhesive.

The tape is provided by being unwound in a roll state, and is manufactured so that an exposed portion where only the release paper is exposed for a certain length from the end of the adhesive is formed at the end of the unwinding, and the exposed portion is sensed by an optical sensor, so that the replacement time of the tape may be accurately guided. Accordingly, waste of tape may be prevented.

A plurality of optical sensors may be disposed, respectively, at positions spaced apart from each other, thereby improving accuracy and reliability.

### BRIEF DESCRIPTION OF THE DRAWINGS

FIG. 1a is a view showing a state where an adhesive to be attached to a battery cell is provided.
FIG. 1b is a view sequentially showing the state of attaching an adhesive to a battery cell.
FIG. 1c are photos showing the sagging of an adhesive and the scattering of the adhesive pieces.
FIG. 2 is a view showing a tape for manufacturing a battery module provided by the present disclosure.
FIG. 3 is an enlarged view of FIG. 2.
FIG. 4 is a view showing the last unwound end of a tape provided by the present disclosure when it is in a roll form.
FIG. 5 is a view showing a state where a tape according to the present disclosure is unwound from one side (left side) and wound to the other side (right side).

### DETAILED DESCRIPTION

Hereinafter, the present disclosure will be described in detail with reference to the accompanying drawings to enable those having ordinary skill in the technical field pertaining to the present disclosure to easily carry out the present disclosure. However, the present disclosure may be embodied in many different forms and is not limited by the embodiments described herein.

To clearly describe the present disclosure, parts irrelevant to the description are omitted, and the identical reference numerals are affixed to the identical or similar elements throughout the specification.

Additionally, the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The present disclosure relates to a tape for manufacturing a battery module in which the adhesive may be cut more accurately and quickly when the gripper ascends and the replacement time of the tape may be identified more accurately, a battery module including a battery cell to which the tape for manufacturing a battery module is attached, and a manufacturing method of the battery module, and hereinafter, embodiments of the present disclosure will be described in more detail with reference to the accompanying drawings.

### Embodiment 1

The manufacturing method of a battery module provided by the present disclosure is provided as an Embodiment 1.

The manufacturing method of a battery module provided in this embodiment is configured to include a tape supply step, an adhesive step, and a cutting step.

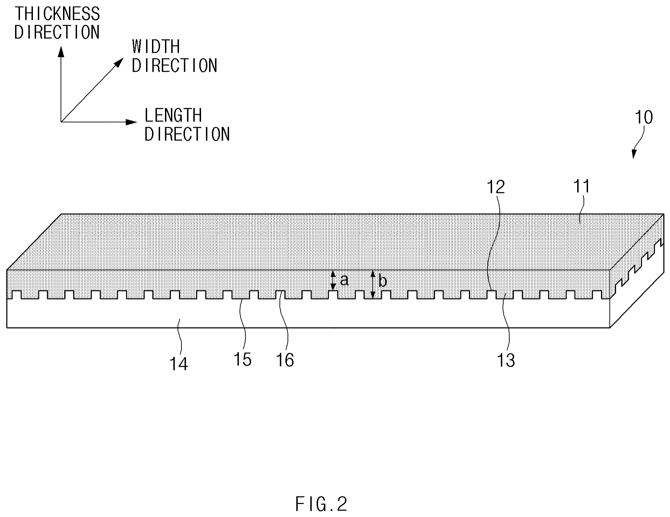

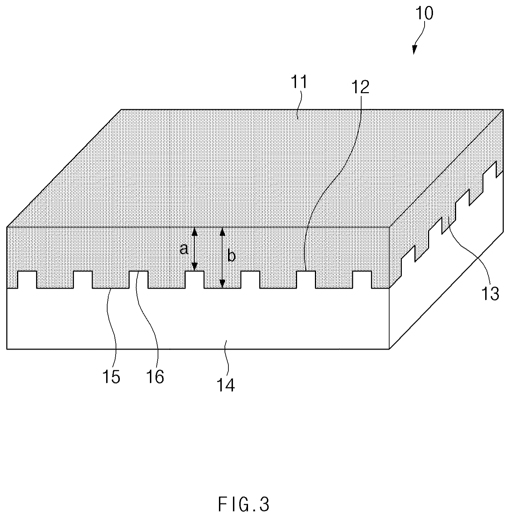

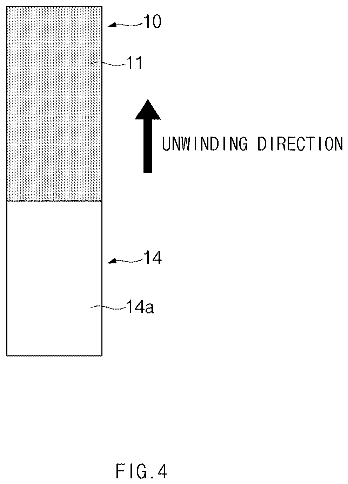

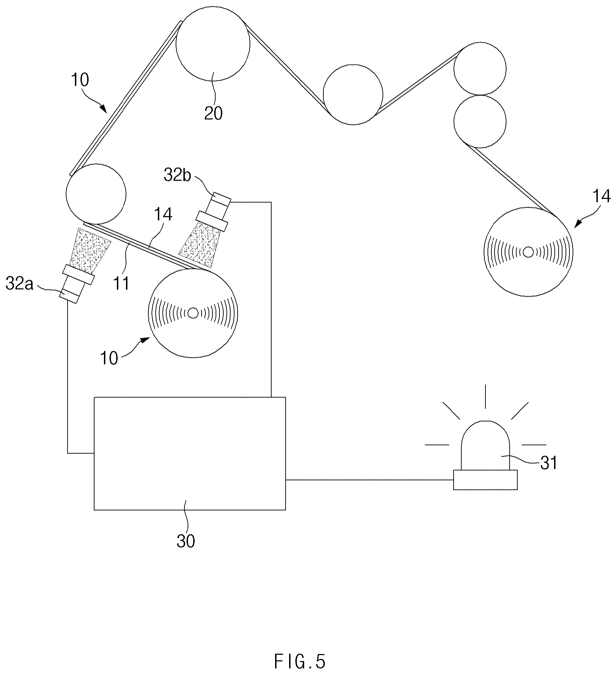

FIG. 2 is a view showing a tape for manufacturing a battery module provided by the present disclosure, and FIG. 3 is an enlarged view of FIG. 2. And, FIG. 4 is a view showing the last unwound end of a tape provided by the present disclosure when it is in roll form, and FIG. 5 is a view showing a state where a tape according to the present disclosure is unwound from one side (left side) and wound to the other side (right side).

In the tape supply step, a laminated tape 10 having a release paper 14 placed on one side and a sheet-like adhesive 11 placed on the other side is continuously supplied to pass through a roller, and is supplied so that the adhesive 11 faces outward and the release paper 14 contacts the roller.

That is, referring to FIG. 5, the tape 10 is provided by being wound in a roll in a state where the release paper 14 and the adhesive 11 are laminated. And, it is disposed to pass through a plurality of rollers, and is configured such that only the release paper 14 is wound at the point where it is recovered.

In this case, the battery cell transferred by the gripper approaches one of the plurality of rollers 20 and comes into contact with the adhesive 11 of the tape 10, and at the point of contact, the adhesive 11 is separated from the release paper 14. Then, only the release paper 14 from which the adhesive 11 has been peeled off is wound and recovered. At this time, the roller 20 is provided so that the adhesive 11 faces outward and the release paper contacts the roller 20.

Then, in the adhesive step, the adhesive 11 is attached to the battery cell. That is, as described in FIG. 1b, when the gripper gripping the battery cell approaches the selected roller 20, the bottom surface of the battery cell contacts the adhesive 11 on the roller 20 and glides for a certain section, and thus the adhesive 11 is separated from the release paper 14 and adhered to the bottom surface of the battery cell.

When the battery cell passes over the roller 20, the gripper lifts the battery cell being gripped by it and breaks the adhesive 11, thereby performing cutting.

That is, in the cutting step, the adhesive 11 is cut by the ascent of the gripper.

Meanwhile, in this embodiment, the tape 10 provided in the tape supply step is formed with a concave portion 12 to induce breakage in the adhesive 11 when a tensile force is generated. That is, the adhesive 11 has a concave portion 12 with a concave shape formed on the contact surface with the release paper 14 so that the thickness is reduced compared to other places.

As the concave portion 12 is formed in the adhesive 11, a convex portion 13 is also formed as an opposite portion. That is, in the adhesive 11, convex portions 13 having a protruding shape are formed between neighboring concave portions 12.

And, the release paper 14 is formed to correspond to irregular shapes composed of recessed portions 15 and protruding portions 16 that engage each of concave portions 12 of the adhesive 11 and convex portions 13 of the adhesive 11.

The adhesive 11 is formed so that the concave portions 12 form a lattice shape on the surface in contact with the release paper 14. That is, as shown in FIGS. 2 and 3, the concave portion 12 and the convex portion 13 are provided in a structure formed to be repeated along the width direction and the length direction of the tape 10. Accordingly, when separated from the release paper 14, the convex portions 13 and the concave portions 12 form a lattice shape like a checkerboard.

In this case, the adhesive 11 is formed so that the length and width of the convex portion 13 are larger than the length and width of the concave portion 12 on the surface in contact with the release paper 14.

That is, the area of the convex portion 13 is formed to be larger than the area of the concave portion 12. Accordingly, when a battery cell or a compression pad adjacent to the convex portion 13 is attached, the contact area is reduced, thereby minimizing the problem of degraded adhesion. Additionally, when a battery cell or a compression pad is attached, the convex portion 13 is deformed by the pressing force, the concave portion 12 may be filled, and degraded adhesion may be prevented.

Additionally, as the area of the concave portion 12 becomes smaller, the point at which the cutting is made is limited to the region of the concave portion 12 when the adhesive 11 is cut, so the pressure (causing cutting) may be concentrated, thereby making the cutting part smoother and cleaner.

The adhesive 11 is formed so that the thickness of the concave portion 12 is in the range of 50% to 70% of the thickness of the convex portion 13. For example, when the thickness b of the convex portion 13 is 50 µm, the thickness a of the concave portion 12 is formed in the range of 25 µm to 35 µm.

For reference, the minimum thickness of the adhesive 11 that may secure reliable adhesion between neighboring battery cells or between the battery cell and the compression pad and may ensure proper alignment even after lamination is known to be 50 µm. This thickness is confirmed based on accumulated production data. If the thickness is less than 50 µm, the adhesion is degraded, and if the thickness of the adhesive is too thick, the adhesion increases somewhat, but problems with alignment after lamination may occur.

In this embodiment, by securing a thickness of 50 µm in the convex portion 13, it is possible to prevent problems arising as the thickness becomes thinner in the concave portion 12, and to induce breakage of the adhesive 11 in the concave portion 12.

Meanwhile, the tape 10 provided in the tape supply step is provided by being unwound in a roll state, and is manufactured so that an exposed portion 14a where only the release paper 14 is exposed for a certain length from the end of the adhesive 11 is formed at the end of the unwinding.

That is, when the entire tape 10 is unwound, the end that is unwound last is provided in a structure where only the release paper 14 protrudes for a predetermined length, as shown in FIG. 4. The release paper 14 does not need to have irregular shapes in the portion forming the exposed portion 14a, but is preferably painted in a color that contrasts with the adhesive 11. That is, the exposed portion 14a is preferably painted in a color easily sensed by the optical sensor 32 (32a, 32b) to be described later so that the optical sensors 32 may sense the exposed portion 14a more accurately and quickly through color change.

Therefore, as shown in FIG. 5, in this embodiment, the optical sensors 32a, 32b are disposed between the point where the tape 10 is unwound and the roller where the unwound tape 10 reaches first so that the exposed portion 14a may be sensed while the tape 10 is unwound.

Only one optical sensor 32 may be disposed, but a plurality of optical sensors 32 may also be disposed, respectively, at locations spaced apart from each other to increase reliability.

And, when the optical sensor 32 senses the exposed portion 14a, it transmits a detection signal to a control unit 30, and the control unit 30 audibly or visually guides the replacement of the tape 10 through an external warning device or alarm device 31.

That is, the manufacturing method of a battery module provided in this embodiment includes a tape replacement guide step, and in the tape replacement guide step, an audible or visual notification is displayed when the optical sensor 32 senses the exposed portion 14a. Upon the replacement notification, the operator may replace the tape 10 in a roll form and initialize the guide step. Alternatively, when the replacement of the tape 10 is made automatically rather than manually by the operator, the guide step may replace an audible or visual notification by sending a replacement signal to the automatic tape replacement device.

### Embodiment 2

The present disclosure provides, as an Embodiment 2, a battery module including a tape for manufacturing a battery module that may be used in the manufacturing method of a battery module provided as the Embodiment 1 and a battery cell to which the tape for manufacturing a battery module is attached.

The tape 10 for manufacturing a battery module provided in this embodiment is provided by laminating the release paper 14 and the sheet-like adhesive 11.

That is, as shown in FIGS. 2 and 3, the tape 10 is provided in a binding state where the sheet-like adhesive 11 attached to the battery cell is placed on one side and the release paper 14 is placed on the other side.

And, the adhesive 11 has the concave portion 12 with a concave shape formed on the contact surface with the release paper 14 so that the thickness is reduced compared to other places.

The portion where the concave portion 12 is not formed has a relatively protruding shape to form the convex portion 13. That is, the convex portion 13 having a protruding shape are formed between neighboring concave portions 12 in the adhesive 11.

And, the release paper 14 is formed to correspond to irregular shapes composed of recessed portions 15 and protruding portions 16 that engage each of concave portions 12 of the adhesive 11 and convex portions 13 of the adhesive 11. The adhesive 11 is formed so that the concave portions 12 form a lattice shape on the surface in contact with the release paper 14.

Also, as shown in FIG. 4, when the tape 10 in a roll form is unwound to the end, the exposed portion 14a where only the release paper 14 is exposed for a certain length from the end of the adhesive 11 is formed at the last unwound end. That is, the tape 10 provided in this embodiment is provided so that the release paper 14 has a longer length than the adhesive 11, and thus it has a portion that is not bonded to the adhesive 11, and the portion that is not bonded thereto forms the exposed portion 14a.

When the tape 10 is unwound as described above, the exposed portion 14a may be selectively formed not only at the last unwound end, but also at the end where unwinding begins.

Accordingly, the control unit 30 sensing the exposed portion 14a through the optical sensor 32 recognizes that the tape 10 has been replaced, and may interrupt or initialize the tape replacement guide or alarm.

In the tape 10 having the above configuration, the adhesive 11 may be attached to the battery cells according to the manufacturing method described in the Embodiment 1, and a plurality of battery cells to which the adhesive 11 is attached may be stacked to form a battery module.

Therefore, the battery module provided in this embodiment is a battery module including (i.e., stacking) at least one battery cell to which the adhesive 11 of the tape for manufacturing a battery module described above is attached.

In the present disclosure having the above configuration, the adhesive 11 has the concave portion 12 with a concave shape formed on the contact surface with the release paper 14, so that when the gripper ascends, the adhesive 11 may be more easily broken in the concave portion 12.

The release paper 14 is formed to correspond to irregular shapes that engage each of the concave portions 12 of the adhesive 11 and the convex portions 13 of the adhesive 11, so that the release paper 14 may stably preserve the adhesive 11 (may maintain the shape of the concave portions and the convex portions).

The tape is provided by being unwound in a roll state, and is manufactured so that the exposed portion 14a where only the release paper is exposed for a certain length from the end of the adhesive is formed at the end of the unwinding, and the exposed portion 14a is sensed by the optical sensor 32, so that it is possible to accurately guide the replacement time of the tape. Accordingly, waste of the tape 10 may be prevented.

A plurality of the optical sensors may be disposed, respectively, at positions spaced apart from each other, thereby improving accuracy and reliability.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [LIST OF REFERENCE NUMERALS]

10: Tape
11: Adhesive
12: Concave portion
13: Convex portion
14: Release paper
20: Roller
30: Control unit
31: Alarm device
32 (32a, 32b): Optical sensor

## Claims

1. A manufacturing method of a battery module, which comprises a step of attaching an adhesive to a battery cell, comprising:
a tape supply step in which a laminated tape having a release paper placed on one side and a sheet-like adhesive placed on the other side is continuously supplied to pass through a roller, and is supplied so that the release paper contacts the roller;
an adhesive step in which a gripper gripping the battery cell glides over the roller so that the adhesive comes into contact with one surface of the battery cell, and thus the adhesive is separated from the release paper and adhered to the battery cell; and
a cutting step in which the adhesive is cut by the ascent of the gripper,
wherein the adhesive has a concave portion with a concave shape formed on the contact surface with the release paper so that the thickness is reduced compared to other places.

2. The manufacturing method of a battery module according to claim 1,
wherein in the adhesive, convex portions having a protruding shape are formed between neighboring concave portions, and
the release paper is formed to correspond to irregular shapes that engage each of the concave portions of the adhesive and the convex portions of the adhesive.

3. The manufacturing method of a battery module according to claim 2,
wherein the adhesive is formed so that the concave portions form a lattice shape on the surface in contact with the release paper.

4. The manufacturing method of a battery module according to claim 2,
wherein the adhesive is formed so that the length of the convex portion is longer than the length of the concave portion on the surface in contact with the release paper.

5. The manufacturing method of a battery module according to claim 2,
wherein the adhesive is formed so that the thickness of the concave portion is in the range of 50% to 70% of the thickness of the convex portion.

6. The manufacturing method of a battery module according to claim 1,
wherein the tape provided in the tape supply step is provided by being unwound in a roll state, and is manufactured so that an exposed portion where only the release paper is exposed for a certain length from the end of the adhesive is formed at the end of the unwinding.

7. The manufacturing method of a battery module according to claim 6, comprising:
a tape replacement guide step in which an optical sensor sensing the exposed portion while the tape is unwound is disposed, and the replacement of the tape is guided when the optical sensor senses the exposed portion.

8. The manufacturing method of a battery module according to claim 7,
wherein in the tape replacement guide step, an audible or visual notification is displayed when the optical sensor senses the exposed portion.

9. The manufacturing method of a battery module according to claim 7,
wherein a plurality of the optical sensors are disposed, respectively, at positions spaced apart from each other.

10. A tape for manufacturing a battery module, which is laminated so that the sheet-like adhesive attached to the battery cell manufactured as a battery module is placed on one side and the release paper is placed on the other side,
wherein the adhesive has a concave portion with a concave shape formed on the contact surface with the release paper so that the thickness is reduced compared to other places.

11. The tape for manufacturing a battery module according to claim 10,
wherein in the adhesive, convex portions having a protruding shape are formed between neighboring concave portions, and
the release paper is formed to correspond to irregular shapes that engage each of the concave portions of the adhesive and the convex portions of the adhesive.

12. The tape for manufacturing a battery module according to claim 10,
wherein the adhesive is formed so that the concave portions form a lattice shape on the surface in contact with the release paper.

13. The tape for manufacturing a battery module according to claim 10,
wherein the release paper has a longer length than the adhesive so that the exposed portion where only the release paper is exposed for a certain length from the end of the adhesive is formed.

14. The tape for manufacturing a battery module according to claim 13,
wherein the exposed portions are formed at each of both ends of the adhesive.

15. A battery module comprising at least one battery cell to which the adhesive of the tape for manufacturing a battery module according to claim 10 is attached.
